# EUROPEAN PATENT APPLICATION

(11) **EP 4 546 510 A1**
(43) Date of publication of application: **30.04.2025**
(21) Application number: 24815662.2
(22) Date of filing: 06.03.2024
(51) Int. Cl.: H01M 10/6554, H01M 50/244, H01M 50/251, H01M 10/6551, H01M 10/6567, H01M 10/6556, H01M 10/613, H01M 10/627

(54) **BATTERY ARRAY**

(30) Priority: 26.05.2023 KR 20230068647
(71) Applicant: LG Energy Solution, Ltd., Seoul 07335 (KR)
(72) Inventor: JEONG, Chan-Young, Daejeon 34122 (KR); GANG, In-Jae, Daejeon 34122 (KR); LEE, Jeong-Won, Daejeon 34122 (KR); JO, Sang-Hyun, Daejeon 34122 (KR); CHO, Young-Bum, Daejeon 34122 (KR)
(74) Representative: BCKIP Part mbB
(86) International application number: PCT/KR2024/002848
(87) International publication number: WO 2024/248280

(57) **Abstract**

A battery array includes a first heat sink having a plate shape; a battery cell unit mounted on a top surface of the first heat sink; a first column coupled to the top surface of the first heat sink and extending in the vertical direction; a second heat sink having a plate shape, located above the first column, and including a bottom surface coupled to the first column; and a reinforcing member located between the second heat sink and the battery cell unit and configured to support the bottom surface of the second heat sink. The battery array has a structure in which a plurality of battery array units is stacked in a vertical direction.

## Description

### [Technical Field]

The present disclosure relates to a battery array.

This application is based on and claims priority from Korean Patent Application No. 10-2023-0068647, filed on May 26, 2023, with the Korean Intellectual Property Office, the disclosure of which are incorporated herein in its entirety by reference.

### [Background Art]

Existing commercially available secondary batteries include, for example, nickel-cadmium batteries, nickel-hydrogen batteries, nickel-zinc batteries, and lithium secondary batteries. Among the commercially available secondary batteries, lithium secondary batteries are attracting attention due to their advantages, compared to nickel-based secondary batteries, such as free charging and discharging due to little memory effect, very low self-discharge rate, and high energy density.

Recently, as issues such as power shortages and eco-friendly energy become more prominent, energy storage systems (ESS) for storing generated power are receiving more attention. For example, a smart grid system is being proposed as one of the ways to control power supply and demand. The amount of power consumption used by consumers is not always constant and may fluctuate from time to time. A representative example is that during the summer, power consumption increases sharply in the afternoon due to the use of air conditioning devices, and then decreases sharply at night. In this way, on the power consumption side, the power consumption is not constant and may fluctuate frequently, but on the power supply side, even if the power production is controlled to some extent, it is realistically difficult to match such power consumption. Therefore, such imbalance between power supply and consumption may result in power oversupply or power supply shortages, and a smart grid system allows flexibly storing and controlling power to solve this problem. Conceptually, the smart grid system may be said to be a system that stores power at points or areas where surplus power is generated and supplies the stored power to points or areas where power shortages occur. It may be said that one of the key components in building such a smart grid system is an energy storage system to store power. In addition, as the commercialization of electric vehicles has progressed in earnest in recent years, energy storage systems may be used in facilities for charging electric vehicles, such as charging stations.

Such energy storage systems may include multiple battery arrays. The battery arrays may each be fabricated by stacking multiple battery array units. In addition, the battery array units may each include multiple battery cell units.

### [Disclosure]

### [Technical Problem]

The present disclosure provides a battery array with improved assemblability.

The present disclosure provides a battery array with a simplified structure.

The present disclosure provides a battery array with increased energy density and improved cooling effect.

### [Technical Solution]

In view of the foregoing, an aspect of the present disclosure provides a battery array including a structure in which a plurality of battery cell units is stacked in a vertical direction. The battery array may include: a first heat sink having a plate shape; a battery cell unit mounted on the top surface of the first heat sink; a first column coupled to the top surface of the first heat sink and extending in the vertical direction; a second heat sink having a plate shape, located above the first column, and including a bottom surface coupled to the first column; and a reinforcing member located between the second heat sink and the battery cell unit and configured to support the bottom surface of the second heat sink.

In addition, the battery array may further include a second column coupled to the top surface of the second heat sink and extending in the vertical direction, and the reinforcing member and the second heat sink may be configured to be located between the first column and the second column.

In addition, the battery array may further include a coupling pin penetrating the second heat sink and the reinforcing member and including a lower portion fitted to the first column and an upper portion fitted to the second column.

In addition, the reinforcing member may be configured to be elongated along an edge of the second heat sink.

In addition, the battery cell unit includes a front battery cell unit and a rear battery cell unit arranged in a front-rear direction, and the first column may include a front column located in front of the front battery cell unit, a rear column located behind the rear battery cell unit, and a middle column located between the front column and the rear column.

In addition, the reinforcing member may include a front reinforcing member extending in a left-right direction and including one end coupled to the front column.

In addition, the reinforcing member may include a middle reinforcing member extending in a left-right direction and including one end coupled to the middle column.

In addition, the reinforcing member may include a side reinforcing member extending in a front-rear direction and including one end coupled to the front column and the other end coupled to at least one of the middle column and the rear column.

In addition, the second heat sink may include an upper plate having a flat plate shape, and a lower plate coupled to a bottom surface of the upper plate and including an accommodation portion configured to receive at least a portion of the reinforcing member.

In addition, the second heat sink may be configured such that a cooling flow path is formed between the upper plate and the accommodation portion.

In addition, the reinforcing member may include an elongated first part, and a second part extending from the first part and configured to be larger than the first part, and the accommodation portion may be configured such that a portion accommodating the second part is formed to be larger than a portion accommodating the first part.

In addition, a plurality of reinforcing members is formed, and each of the plurality of reinforcing members may be configured to have partially different sizes.

In addition, a battery array according to an aspect of the present disclosure may include: a first heat sink having a plate shape; a battery cell unit mounted on the top surface of the first heat sink; a first column coupled to a top surface of the first heat sink and extending in a vertical direction, wherein the first column includes an upper portion configured to be fastened to another component; and a reinforcing member configured to support a bottom surface of the first heat sink.

In addition, a battery container according to an aspect of the present disclosure includes the battery array of the present disclosure.

In addition, an energy storage system according to an aspect of the present disclosure includes the battery array of the present disclosure.

A battery array unit assembly according to another aspect of the present disclosure may include: a heat sink having a plate shape; a column coupled to the top surface of the heat sink and extending in a vertical direction; and a reinforcing member located below the heat sink and configured to support the bottom surface of the heat sink.

The reinforcing member may be an H-bracket.

A heat transfer material may be coated on the top surface of the heat sink having the plate shape.

### [Advantageous Effects]

According to at least one of the embodiments of the present disclosure, the energy density of the battery array is improved.

According to at least one of the embodiments of the present disclosure, the structural rigidity of the battery array is improved.

According to at least one of the embodiments of the present disclosure, the assemblability of the battery array is improved.

### [Description of Drawings]

The following drawings attached hereto exemplify embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a perspective view illustrating a battery array according to an embodiment of the present disclosure.
FIG. 2 is a partially exploded perspective view of the battery array according to an embodiment of the present disclosure.
FIG. 3 is a view illustrating a heat sink separated from the battery array according to an embodiment of the present disclosure.
FIG. 4 is a view illustrating a cooling medium flowing through the heat sink of the battery array according to an embodiment of the present disclosure.
FIG. 5 is a bottom side perspective view of the heat sink of the battery array according to an embodiment of the present disclosure.
FIGS. 6 and 7 are views illustrating how reinforcing members are coupled to a heat sink of a battery array according to an embodiment of the present disclosure.
FIG. 8 is a view illustrating how coupling pins are coupled to a battery array according to an embodiment of the present disclosure.
FIG. 9 is a view illustrating a heat sink and coupling pins of a battery array according to an embodiment of the present disclosure.
FIG. 10 is a view illustrating a heat sink and columns of a battery array according to an embodiment of the present disclosure.
FIG. 11 is a view illustrating a heat sink, columns, and battery cells according to an embodiment of the present disclosure.
FIG. 12 is a view illustrating a heat sink, columns, battery cell units, and a cover of a battery array according to an embodiment of the present disclosure.
FIG. 13 is a view illustrating a heat sink, columns, battery cell units, a cover, and a Battery Management System (BMS) of a battery array according to an embodiment of the present disclosure.
FIG. 14 is a view illustrating stacking of battery arrays according to an embodiment of the present disclosure.
FIG. 15 is a view illustrating a heat sink and reinforcing members of a battery array according to another embodiment of the present disclosure.
FIG. 16 is a view illustrating a heat sink and reinforcing members of a battery array according to another embodiment of the present disclosure.
FIG. 17 is a view illustrating an example of a configuration taken along cutting line E-E' in FIG. 9.
FIG. 18 is an enlarged view of portions F, G, and H of FIG. 17.
FIG. 19 is a view illustrating an example of portions F, G, and H of FIG. 17.
FIG. 20 is a cross-sectional view illustrating a portion of a configuration taken along cutting line A-A' in FIG. 1.
FIG. 21 is an enlarged view of portion B in FIG. 20.
FIG. 22 is an enlarged view of portion C in FIG. 20.
FIG. 23 is an enlarged view of portion D in FIG. 20.
FIG. 24 is a view illustrating a battery array and a case according to an embodiment of the present disclosure.
FIG. 25 is a view illustrating how the battery array and the case according to an embodiment of the present disclosure are coupled to each other.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### [Mode for Invention]

Hereinafter, embodiments of the present disclosure will be described in detail with reference to the accompanying drawings. Prior to this, the terms and words used in the specification and claims should not be construed as limited to their ordinary or dictionary meanings, but should be construed as meanings and concepts consistent with the technical idea of the present disclosure based on a principle that the inventor may appropriately define the concepts of terms in order to explain his or her invention in the best way.

Accordingly, it should be understood that since the embodiments described herein and the configurations illustrated in the drawings are merely example embodiments of the present disclosure, and do not represent all the technical ideas of the present disclosure, there may be various equivalents and modifications that may replace the embodiments at the time of filing the present application. Also, throughout this document, references to directions and orientations, such as upward, downward, upper, lower, up, down, top, bottom, inward, outward, lateral, front, rear, and the like, are made. These references are exemplary, for describing and explaining the present disclosure, and embodiments thereof, and are not limiting in any way.

A battery array constituting an energy storage system is constituted by stacking multiple battery array units, and as the demand for the energy increases in the energy storage system, an improved structure of a battery array having a space with limited height is necessary. The present disclosure provides, for example, the structure of a battery array in which multiple battery cell units can be stacked.

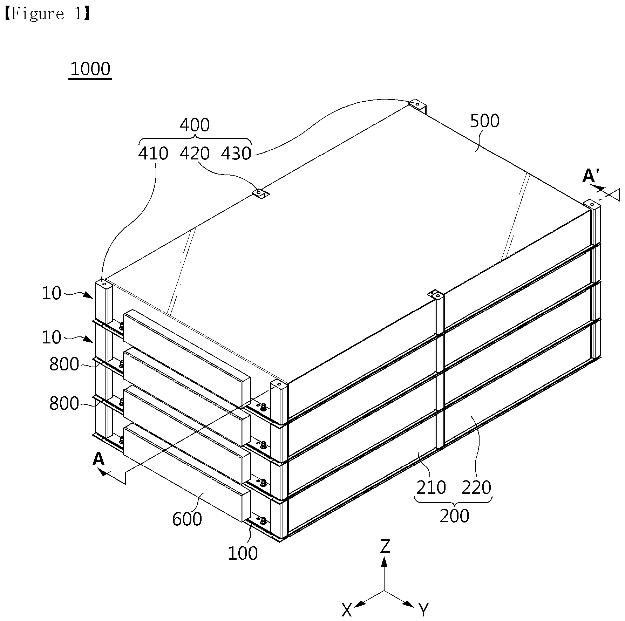

FIG. 1 is a perspective view illustrating a battery array 1000 according to an embodiment of the present disclosure.

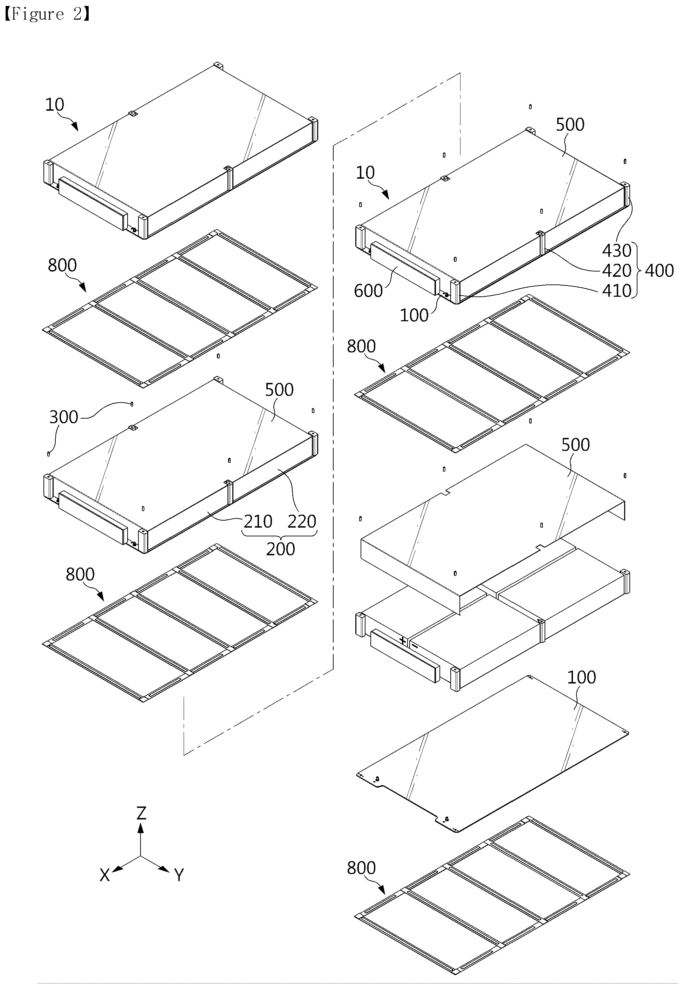

FIG. 2 is a partially exploded perspective view illustrating the battery array 1000 according to an embodiment of the present disclosure. Referring to FIGS. 1 and 2, the battery array 1000 according to an embodiment of the present disclosure may include a structure in which a plurality of battery array units 10 are stacked in a vertical direction. The battery array units 10, which are unit structures constituting the battery array 1000 according to an embodiment of the present disclosure, may each include, for example, a heat sink 100, a battery cell unit 200, a coupling pin 300, a column 400, a cover 500, a battery management system (BMS) 600, a battery array case 700, and a reinforcing member 800. Meanwhile, in an embodiment of the present disclosure, the basic structure of the battery array unit 10 for accommodating the battery cell units 200 may include, for example, a first heat sink 100, a first column, and a reinforcing member 800.

For convenience, when it is necessary to distinguish the upper and lower battery array units of the two battery array units 10 stacked in the vertical direction, the battery array unit 10 located at the bottom will be referred to as a first battery array unit 10, and the battery array unit 10 located at the top will be referred to as a second battery array unit 10. In addition, when necessary, the basic components constituting the first battery array unit 10 may be referred to as, for example, a first heat sink 100, a first battery cell unit 200, a first coupling pin 300, and a first column 400. In addition, the components of the second battery array unit 10 stacked with the first battery array unit 10 may also be referred to as, for example, a second heat sink 100, a second battery cell unit 200, a second coupling pin 300, and a second column 400. When there is no need to distinguish the upper and lower battery array units, the components will be referred to accordingly without distinction, for example, as a heat sink 100, a battery cell unit 200, a coupling pin 300, and a column 400.

In the basic components of the battery array unit 10 according to an embodiment of the present disclosure, a reinforcing member 800 may be located at the bottom, a heat sink 100 may be disposed on the reinforcing member 800, a battery cell unit 200 may be disposed on the heat sink 100, and a plurality of columns 400 may be seated on, coupled, fixed, fastened, or attached to the top surface of the heat sink 100. In addition, the columns 400 may be configured to extend in the vertical direction or Z-axis direction. With the configuration, since the reinforcing member 800 is capable of withstanding the load of the heat sink 100 and the battery cell unit 200, bending or sagging can be prevented. In addition, a desired number of battery array units 10 configured as described above may be stacked on or below another similarly configured battery array unit 10 to form a battery array 1000. In addition, the top surface of the heat sink 100 is coated with a heat transfer material, such as a resin with improved thermal conductivity, to promote heat conduction from the battery cell unit 200 to the heat sink 100. Hereinafter, the structure of the battery array 1000 will be described in more detail.

The first heat sink 100 constituting the first battery array unit 10 may have a plate shape. In addition, the first battery cell unit 200 may be seated on, coupled, fixed, fastened, or attached to the top surface of the first heat sink 100. The first battery cell unit 200 may include at least one battery cell. In this case, the battery cell may refer to a secondary battery, also known as a rechargeable battery. For example, the battery cell may be a pouch-shaped secondary battery. The first heat sink 100 of the first battery array unit 10 may be configured to dissipate the heat generated from the first battery cell unit 200 to the outside. There may be provided a plurality of first battery cell units 200.

The first columns 400 of the first battery array unit 10 may be seated on, coupled, fixed, fastened, or attached to the top surface of the first heat sink 100. In addition, the first columns 400 may be configured to extend in the vertical or Z-axis direction.

The second heat sink 100 of the second battery array unit 10 stacked on the first battery array unit 10 may have a plate shape and may include a bottom surface located on the first columns 400 of the first battery array unit 10 and seated on, coupled, fixed, fastened, or attached to the first column 400. The second heat sink 100 may have substantially the same structure or component as the first heat sink 100.

Meanwhile, the second reinforcing member 800 of the second battery array unit 10 may be located between the second heat sink 100 and the first battery cell unit 200 of the first battery array unit 10 located below, and may be configured to support the bottom surface of the second heat sink 100. A plurality of reinforcing members 800 may be provided for each heat sink 100 or each battery array unit 10 constituting the battery array. In the first battery array unit 10, the first reinforcing members 800 may be fastened, coupled, fixed, or attached to the bottom surface of the first heat sink 100.

According to the configuration of the present disclosure, stacking of the battery arrays can be readily performed. The heat sink 100 of each battery array unit 10 may serve as a base plate to which the battery cell unit 200 of the corresponding battery array unit 10 is coupled so that a stacking configuration can be simplified. In addition, the first column 400 may support the load of the battery array 1000 by connecting and coupling the second heat sink 100 to the first heat sink 100. This makes it possible to simplify the stacking configuration. As a result, the energy density of the battery array 1000 in the vertical direction can be improved.

In addition, according to the configuration of the present disclosure, the heat sink 100 can be prevented from bending or sagging when the battery array 1000 is formed. In each battery array unit 10, the heat sink 100 may receive a load from the battery cell unit 200 provided on the top surface thereof, but since the reinforcing members 800 support the heat sink 100, the heat sink 100 can be prevented from bending or sagging even when the heat sink 100 receives the load.

Referring back to FIGS. 1 and 2, the battery array 1000 according to an embodiment of the present disclosure may be formed by stacking a plurality of battery array units 10 in the vertical direction. In this case, defining the battery array unit 10 at the lower side as a reference, the battery array unit 10 according to an embodiment of the present disclosure may include a first heat sink 100 having a plate shape, battery cell units 200 seated on the top surface of the first heat sink 100, first columns 400 coupled to the top surface of the first heat sink 100 and extending in the vertical direction, in which each of the first columns includes an upper portion configured to be fastened to another component, and first reinforcing members 800 configured to support the bottom surface of the heat sink 100. In this case, the other component that may be fastened to the first column 400 may be another battery array unit 10 or the heat sink 100 of the other battery unit 10.

According to the configuration of the present disclosure, the battery array 1000 according to an embodiment of the present disclosure may include a plurality of battery array units 10 having substantially the same structure or configuration. Accordingly, a battery array may be produced by stacking, assembling, fastening, or coupling a plurality of fully assembled battery array units 10 in the vertical direction. Due to this, the productivity and energy density of the battery array can be improved.

In addition, according to the configuration of the present disclosure, the heat sink 100 can be prevented from bending or sagging.

Referring to FIGS. 1 and 2, the battery array 1000 according to an embodiment of the present disclosure may include second battery cell units 200 mounted on the top surface of the second heat sink 100. The second battery cell units 200 may have substantially the same configuration or structure as the first battery cell units 200.

According to the configuration of the present disclosure, the battery array 1000 according to an embodiment of the present disclosure may be fabricated by stacking the battery array units 10 with the same structure or configuration. Due to this, productivity and energy density of the battery array 1000 can be improved over the conventional battery array.

Referring to FIGS. 1 and 2, the battery array 1000 according to an embodiment of the present disclosure may include second columns 400 coupled to the top surface of the second heat sink 100 and extending in the vertical direction. The second columns 400 may have substantially the same configuration or structure as the first columns 400.

According to the configuration of the present disclosure, the battery array 1000 according to an embodiment of the present disclosure may be configured by stacking the battery array units 100 with the same structure or configuration. Due to this, productivity and energy density of the battery array 1000 can be improved over the conventional battery array.

Referring back to FIGS. 1 and 2, the second columns 400 of the battery array 1000 according to an embodiment of the present disclosure may be configured to be located in the direction in which the first columns 400 extend.

According to the configuration of the present disclosure, the second columns 400 may transfer the load placed on the second heat sink 100 to the first columns 400. Due to this, the load of the battery array 1000 can be stably supported.

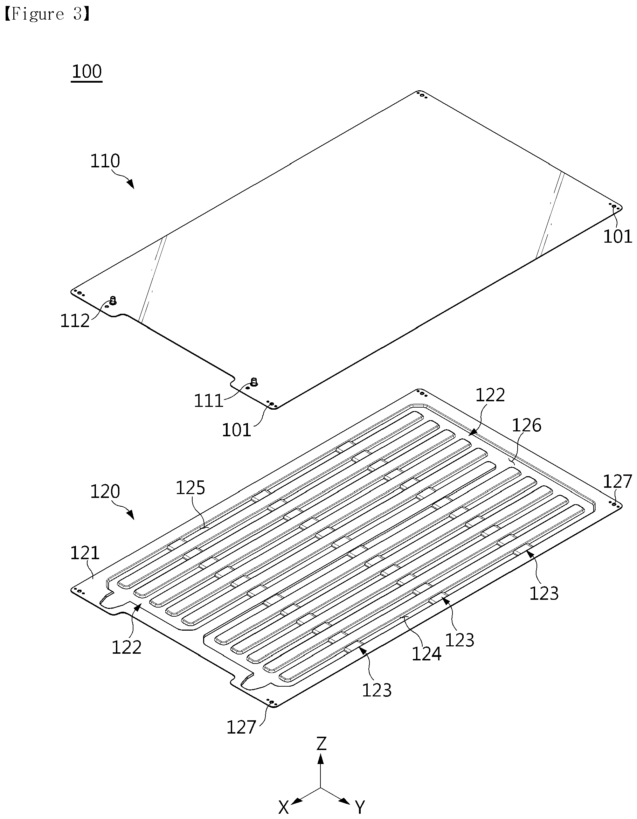

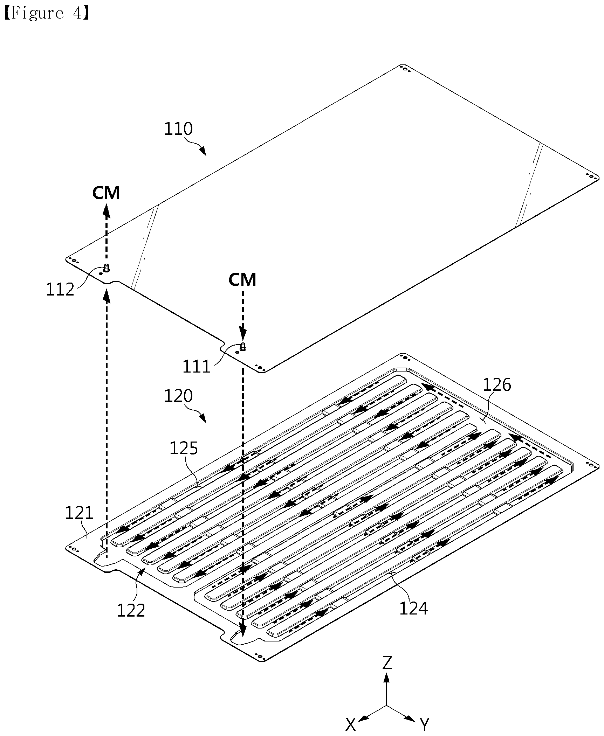

FIG. 3 is a view illustrated the heat sink 100 separated from the battery array 1000 according to an embodiment of the present disclosure. FIG. 4 is a view illustrating a cooling medium cm flowing through the heat sink 100 of the battery array 1000 according to an embodiment of the present disclosure. Referring back to FIGS. 3 and 4, the heat sink 100 of the battery array 1000 according to an embodiment of the present disclosure may include an upper plate 110 having a flat plate shape and a lower plate 120 coupled to the upper plate 110 under the upper plate 110. The lower plate 120 includes a coupling portion 121 and protrusions 122 bent downward from the coupling portion 121. In addition, the heat sink 100 may be configured such that a cooling flow path is formed between the upper plate 110 and the protrusions 122 of the lower plate 120. According to an embodiment, the protrusions 122 may be formed as a downwardly bent structure by partially pressing the lower plate 120 into a predetermined shape through, for example, press working.

The upper plate 110 may have a square plate shape. The upper plate 110 may be configured in a flat plate shape.

The lower plate 120 may have a square plate shape. The lower plate 120 may be coupled, attached, fastened, welded, or fixed to the bottom surface of the upper plate 110. The coupling portion 121 of the lower plate 120 may have a flat plate shape. By coupling, attaching, and welding the upper plate 110 and the lower plate 120 to each other, the protrusions 122 may form a cooling flow path.

According to the configuration of the present disclosure, the heat of the battery cell unit 200 can be cooled by the heat sink 100. By providing the heat sink 100 for each battery array unit 10 of the present disclosure, the battery array can be effectively cooled.

Referring to FIGS. 3 and 4, the cooling flow path of the battery array 1000 according to an embodiment of the present disclosure may include a plurality of first flow paths 124 that communicates with an inlet port 111 and is partitioned in the front-rear direction, a plurality of second flow paths 125 that communicates with an outlet port 112 and is partitioned in the front-rear direction, and a third flow path 126 that allows the plurality of first flow paths 124 and the plurality of second flow paths 125 to communicate with each other.

The upper plate 110 may include the inlet port 111 and the outlet port 112 at the front side of the top surface. The cooling medium cm may flow into the heat sink 100 through the inlet port 111 of the upper plate 110, may sequentially flow through the first flow paths 124, the third flow path 126, and the second flow paths 125, and may then flow out to the outside of the heat sink 100 through the outlet port 112.

In this case, the first flow paths 124 and the second flow paths 125 may be configured as a plurality of parallel flow paths. The plurality of parallel flow paths may be configured to be parallel to each other.

The battery array 1000 of the present disclosure may include a relatively thin heat sink 100 to implement high energy density. Due to this, the height of the flow paths of the heat sink 100 may be low. According to an embodiment, the total thickness of the heat sink 100 may be approximately 7.5 mm.

Therefore, according to the configuration of the present disclosure, the first flow paths 124 and the second flow paths 125 may be configured with a plurality of flow paths, so that the pressure of the cooling medium cm flowing through the heat sink 100 can be distributed. Due to this, the battery array 1000 can be maintained in a stable state.

In addition, according to the configuration of the present disclosure, the protrusions 122 of the heat sink 100 may be partitioned to form a plurality of flow paths in the front-rear direction or the X-axis direction. Due to this, the rigidity of the heat sink 100 can be improved and the stability of the battery array 1000 can be improved over the conventional battery array.

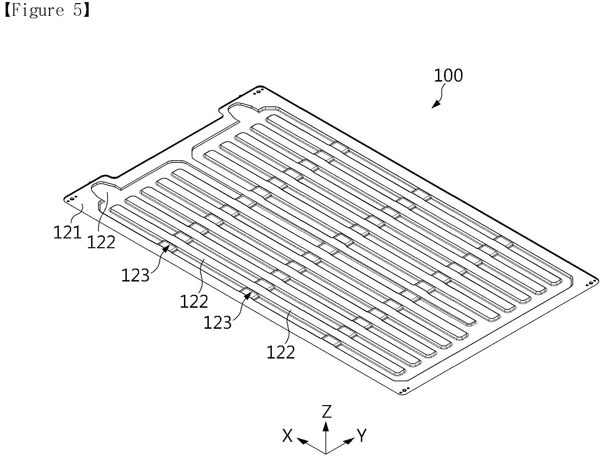

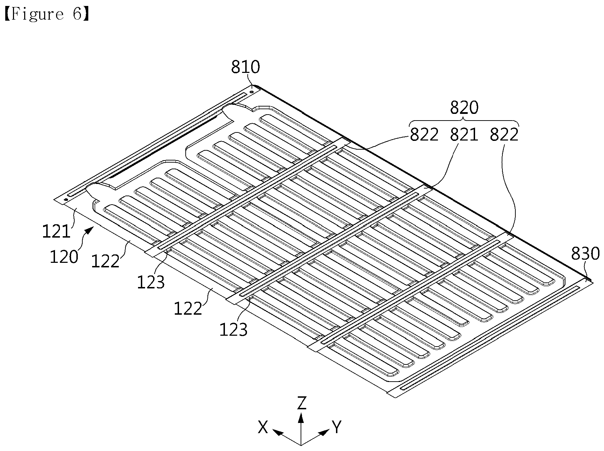

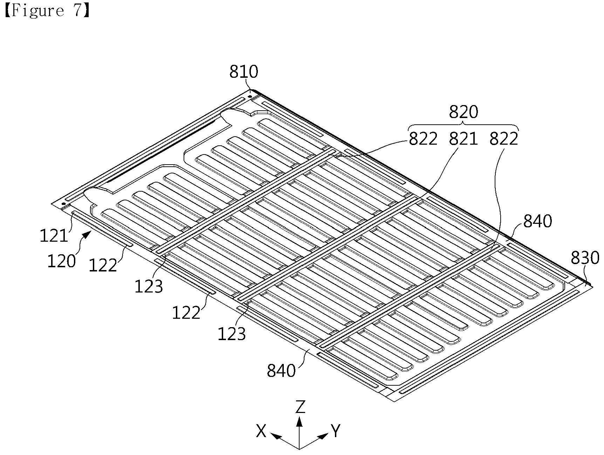

FIG. 5 is a bottom side perspective view illustrating a heat sink 100 of a battery array 1000 according to an embodiment of the present disclosure. FIGS. 6 and 7 are views illustrating how reinforcing members 800 are coupled to the heat sink 100 of the battery array 1000 according to an embodiment of the present disclosure. Referring to FIGS. 5 to 7, the lower plate 120 of the heat sink 100 of the battery array 1000 according to an embodiment of the present disclosure may include an accommodation portion 123.

The accommodation portion 123 may be formed by the protrusions 122 that are at least partially bent or protrude upward. In addition, the reinforcing members 800 may be configured to be at least partially accommodated in the accommodation portion 123. The protruding height or bending height of the accommodation portion 123 may be equal to or greater than the thickness of the reinforcing members 800. For example, the accommodation portion 123 may be elongated lengthways along the Y-axis direction, the front edge of the lower plate 120, or the rear edge of the lower plate 120. There may be provided a plurality of accommodation portions 123 corresponding to the number of reinforcing members 800.

According to the configuration of the present disclosure, even when the reinforcing members 800 support the heat sink 100, it may be possible to prevent the height of the battery array 1000 or the battery array unit 10 from increasing. Due to this, the energy density of the battery array 1000 can be increased.

Referring to FIGS. 3 to 7, the second heat sink 100 of the battery array 1000 according to an embodiment of the present disclosure may be configured such that the cooling flow paths are formed between the upper plate 110 and the accommodation portion 123. A cooling medium cm may flow between the protrusions 122 and the upper plate 110 and between the accommodation portions 123 and the upper plate 110.

According to the configuration of the present disclosure, the heat generated from the battery cell units 200 can be efficiently cooled while increasing the energy density of the battery array 1000.

Referring to FIGS. 5 to 7, the reinforcing members 800 of the battery array 1000 according to an embodiment of the present disclosure may each be configured to be elongated along an edge of the second heat sink 100. The reinforcing members 800 (810, 820 (821, 822), 830) may be elongated in the Y-axis direction, along the front edge of the heat sink 100, or the rear edge of the heat sink 100. In addition, the reinforcing members 800 (840) may be elongated in the X-axis direction or along the side edges of the heat sink 100.

According to the configuration of the present disclosure, a plurality of reinforcing members 800 is provided so that the heat sink 100 can be stably supported. This makes it possible to improve the structural stability of the battery array 1000.

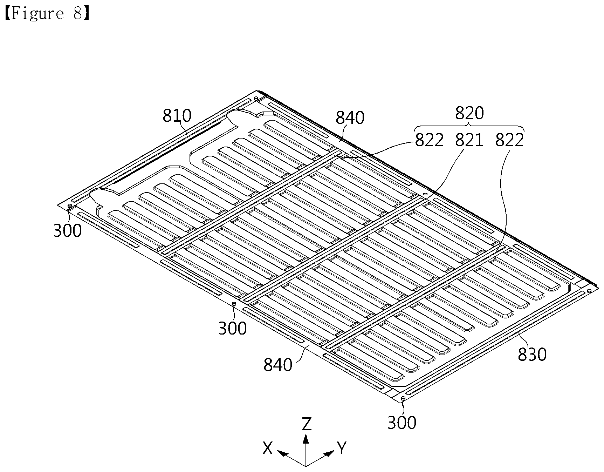

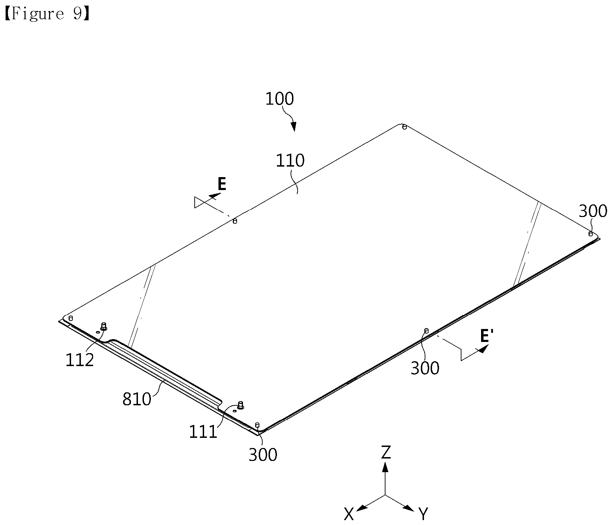

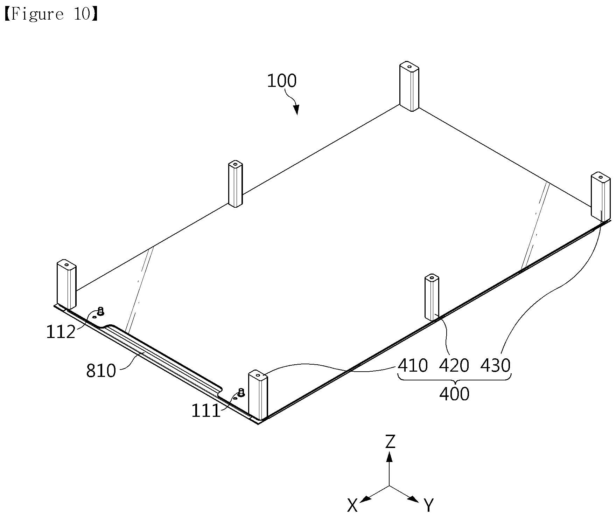

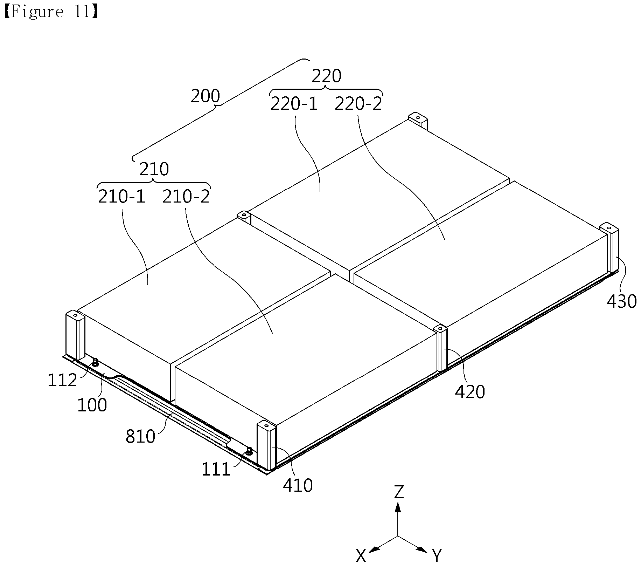

FIG. 8 is a view illustrating how coupling pins 300 are coupled to reinforcing members 800 of a battery array 1000 according to an embodiment of the present disclosure. FIG. 9 is a view illustrating the heat sink 100 and the coupling pins 300 of the battery array 1000 according to an embodiment of the present disclosure. FIG. 10 is a view illustrating the heat sink 100 and the columns 400 of the battery array 1000 according to an embodiment of the present disclosure. FIG. 11 is a view illustrating the heat sink 100, the columns 400, and the battery cell units 200 of the battery array 1000 according to an embodiment of the present disclosure. Referring to FIGS. 8 to 11, the first battery cell units 200 of the battery array 1000 according to an embodiment of the present disclosure may include front battery cell units 210 and rear battery cell units 220 arranged in the front-rear direction.

The front battery cell units 210 and the rear battery cell units 220 may be individually fastened, fixed, coupled, or attached to the heat sink 100. In addition, the front battery cells 210 may be configured as a pair.

According to the configuration of the present disclosure, the battery array unit 10 includes the plurality of battery cell units 210 and 220, and as a result, the energy storage capacity and output may be improved over the conventional battery array unit.

Referring to FIGS. 8 to 11, the pair of front battery cell units 210 of the battery array 1000 according to an embodiment of the present disclosure may be arranged in the left-right direction. In addition, the rear battery cell units 220 may be configured as a pair. The pair of rear battery cell units 220 may be arranged in the left-right direction.

In this case, the pair of front battery cell units 210 may include different numbers of battery cells, respectively. For this reason, the widths of the pair of front battery cell units 210 in the left-right direction may be configured to be different from each other. For example, the pair of front battery cell units 210 may include 19 battery cells and 21 battery cells, respectively.

In addition, the pair of front battery cell units 220 may include different numbers of battery cells, respectively. For this reason, the widths of the pair of rear battery cell units 220 in the left-right direction may be configured to be different from each other. For example, the pair of rear battery cell units 220 may include 19 battery cells and 21 battery cells, respectively.

In addition, the front battery cell unit 210 and the rear battery cell unit 220, which face each other in the front-rear direction, may include different numbers of battery cells. For example, a front battery cell unit 210-1 including 19 battery cells may face a rear battery cell unit 220-2 including 21 battery cells. In addition, a front battery cell unit 210-2 including 21 battery cells may face a rear battery cell unit 220-2 including 19 battery cells.

In addition, according to the configuration of the present disclosure, the pressure and torque applied to the heat sink 100 can be distributed. Furthermore, a wire arrangement connecting the plurality of battery cell units 210 and 220 can be facilitated.

Referring to FIGS. 8 to 11, the first columns 400 of the battery array 1000 according to an embodiment of the present disclosure may include middle columns located between the front battery cell units 210 and the rear battery cell units 220.

The middle columns 420 may be configured as a pair. The pair of middle columns 420 may be arranged in the left-right direction. The middle columns 420 may be in contact with the rear surfaces of the front battery cell units 210 or the front surfaces of the rear battery cell units 220.

According to the configuration of the present disclosure, the middle columns 420 may prevent the central portion of the heat sink 100 from sagging. Due to this, the structural rigidity and stability of the battery array 1000 can be improved over the conventional battery array.

Referring to FIGS. 8 to 11, the first columns 400 of the battery array 1000 according to an embodiment of the present disclosure may include front columns 410 located in front of the front battery cell units 210, and rear columns 430 located behind the battery cell units 220.

The front columns 410 may be configured as a pair. The pair of front columns 410 may be arranged in the left-right direction. The front columns 410 may be in contact with the front surfaces of the front battery cell units 210.

The rear columns 430 may be configured as a pair. The pair of rear columns 430 may be arranged in the left-right direction. The rear columns 430 may be in contact with the rear surfaces of the rear battery cell units 220.

According to the configuration of the present disclosure, the heat sink 100 can be prevented from sagging by the front columns 410 and the rear columns 430. In addition, the load applied to the heat sink 100 can be appropriately distributed by the front columns 410 and the rear columns 430. Due to this, the structural rigidity and stability of the battery array 1000 can be improved over the conventional battery array.

According to the configuration of the present disclosure, the coupling pins 300 can be easily assembled, coupled, fastened, or fixed to the columns 400. Due to this, the assemblability of the battery array 1000 can be improved over the conventional battery array.

Referring to FIGS. 8 to 11, the reinforcing members 800 of the battery array 1000 according to an embodiment of the present disclosure may include a front reinforcing member 810 extending in the left-right direction and having one end coupled to a front column 410. The front reinforcing member 810 may extend, for example, along the front edge of the heat sink 100. The opposite ends of the front reinforcing member 810 may be fastened, coupled, or fixed to the pair of front columns 410, respectively.

According to the configuration of the present disclosure, the front side of the heat sink 100 can be stably supported by the front reinforcing member 810.

Referring to FIGS. 8 to 11, the reinforcing members of the battery array 1000 according to an embodiment of the present disclosure may include middle reinforcing members 820 extending in the left-right direction and having one end coupled to a middle column 420. The middle reinforcing member 820 may extend in the central portion of the heat sink 100 to be parallel to the front edge or rear edge of the heat sink 100. The opposite ends of a first middle reinforcing member 821 may be fastened, coupled, or fixed to a pair of middle columns 420, respectively. The opposite ends of second middle reinforcing members 822 may each be fastened, coupled, or fixed to the heat sink 100.

According to the configuration of the present disclosure, the central portion of the heat sink 100 can be stably supported by the middle reinforcing members 820.

Referring to FIGS. 8 to 11, the reinforcing members 800 of the battery array 1000 according to an embodiment of the present disclosure may include a rear reinforcing member 830 extending in the left-right direction and having one end coupled to a rear column 430. The rear reinforcing member 830 may extend, for example, along the rear edge of the heat sink 100. The opposite ends of the rear reinforcing members 830 may be fastened, coupled, or fixed to a pair of rear columns 430, respectively.

According to the configuration of the present disclosure, the rear side of the heat sink 100 can be supported by the rear reinforcing member 830.

Referring to FIGS. 8 to 11, the reinforcing members 800 of the battery array 1000 according to an embodiment of the present disclosure may include side reinforcing members 840 in which a side reinforcing member extends in the front-rear direction and having one end coupled to a front column 410 and the other end coupled to at least one of a middle column 420 and a rear column 430. The side reinforcing members 840 may extend along the side edges of the heat sink 100. The side reinforcing members 840 may each be fastened, coupled, or fixed to at least two of the front columns 410, the middle columns 420, and rear columns 430.

According to the configuration of the present disclosure, the side areas of the heat sink 100 can be stably supported by the side reinforcing members 840.

Referring to FIGS. 8 to 11, the battery array 1000 according to an embodiment of the present disclosure may include coupling pins 300, each of which penetrates the second heat sink 100 and a reinforcing member 800 and includes a lower portion fitted to a first column 400 and an upper portion fitted to a second column 400.

A coupling pin 300 may be provided, fitted, coupled, fastened, fixed, or attached to each column 400. The coupling pins 300 may be partially fitted, coupled, or fastened to the columns 400, respectively, and the remaining portions thereof may be exposed to the upper side of the columns 400. For example, the coupling pins 300 may be assembled, coupled, fastened, or fixed to the columns 400 in a forced fit manner.

A coupling pin 300 may sequentially pass through or penetrate the front reinforcing member 810, the side reinforcing members 840, and the heat sink 100. In addition, a coupling pin 300 may sequentially pass through or penetrate the middle reinforcing members 821, the side reinforcing members 840, and the heat sink 100. In addition, a coupling pin 300 may sequentially pass through or penetrate the rear reinforcing member 830, the side reinforcing members 840, and the heat sink 100.

According to the configuration of the present disclosure, the coupling pins 300 may be coupled, fastened, or fixed to the reinforcing members 800, the columns 400, and the heat sink 100. Due to this, the assemblability and productivity of the battery array 1000 can be improved.

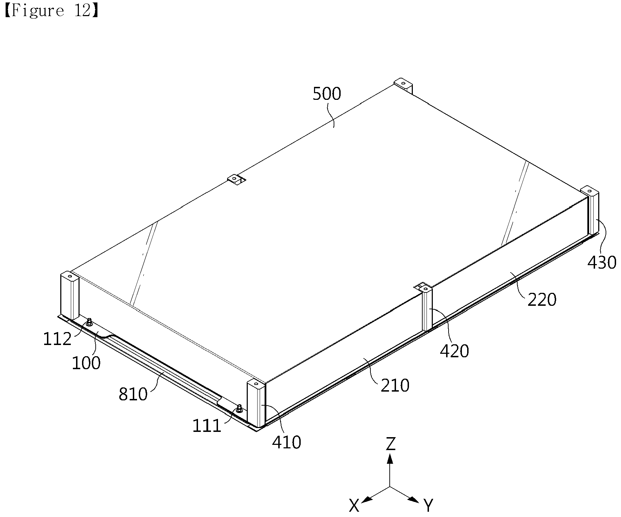

FIG. 12 is a view illustrating a heat sink 100, columns 400, battery cell units 200, and a cover 500 of a battery array 1000 according to an embodiment of the present disclosure. Referring to FIG. 12, the battery array 1000 according to an embodiment of the present disclosure may include a cover 500 disposed between the first battery cell units 200 and the second heat sink 100 disposed on top of the first battery cell units 200.

The cover 500 may also be referred to as an insulating cover 500. The insulating cover 500 may have an electrical insulation property. The insulating cover 500 may cover the front surfaces of the front battery cell units 210. In addition, the insulating cover 500 may cover the top surfaces of the front battery cell units 210 and the top surfaces of the rear battery cell units 220. In addition, the insulating cover 500 may cover the rear surfaces of the rear battery cell units 220. The insulating cover 500 may electrically insulate upper and lower battery array units 10 which are vertically adjacent to each other. The insulating cover 500 may be provided for each battery array unit 10.

The columns 400 may include a coating layer having an electrical insulation property. Alternatively, the columns 400 may be covered with a film having an electrical insulation property.

According to the configuration of the present disclosure, the electrical safety of the battery array 1000 can be improved over the conventional battery array.

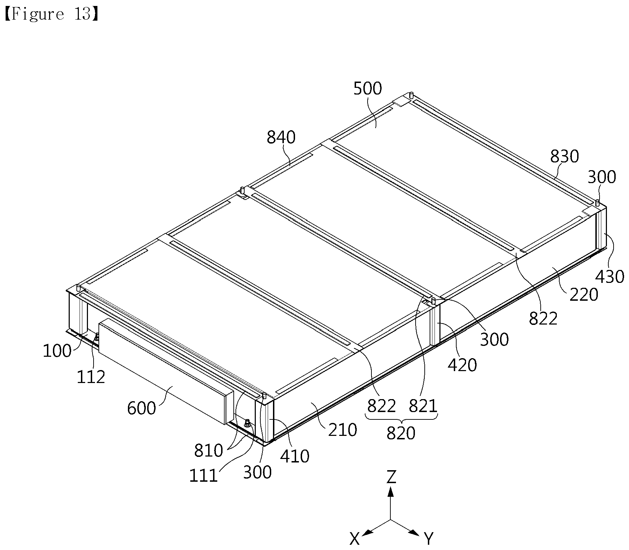

FIG. 13 is a view illustrating a heat sink 100, columns 400, battery cell units 200, and a cover 500, a battery management system 600, and a reinforcing member 800 of a battery array unit 10 according to an embodiment of the present disclosure. Referring to FIG. 13, the first columns 400 of the battery array unit 10 according to an embodiment of the present disclosure may include a pair of front columns 410 located in front of a front battery cell unit 210, and a battery management system (BMS) 600 located between the pair of front columns 410 and electrically connected to the front battery cell unit 210. The BMS 600 may be configured to control charging and discharging of the battery cell units 200. The BMS 600 may be provided for each battery array unit 10. In addition, respective BMSs 600 may be electrically connected to each other.

According to the configuration of the present disclosure, a space efficiency can be improved since the BMS 600 between the pair of front columns 410. Due to this, the energy density of the battery array 1000 can be improved over the conventional battery array.

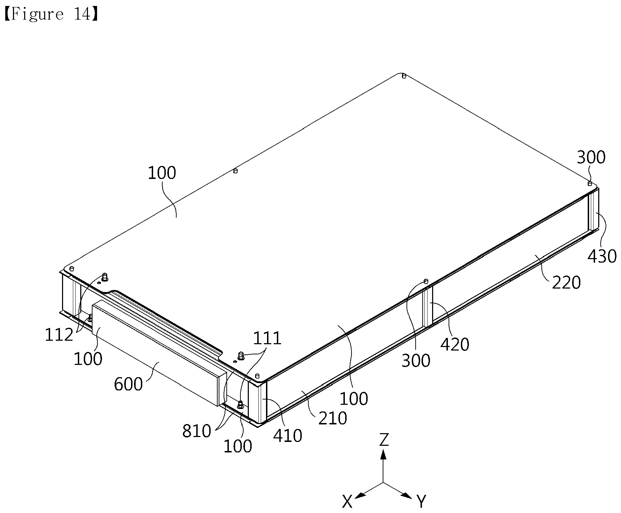

FIG. 14 is a view for explaining stacking of battery arrays according to an embodiment of the present disclosure. Referring to FIGS. 1, 13, and 14, the battery array 1000 according to an embodiment of the present disclosure may further include second columns coupled to the top surface of the second heat sink 100 of the second battery array unit 10 and extending in the vertical direction, and the reinforcing members 800 and the second heat sink 100 may be configured to be located between the first columns 400 and the second columns 400.

The battery array 1000 according to an embodiment of the present disclosure may include the coupling pins 300, which penetrate the second heat sink 100 and include lower portions fitted to the first column 400 and upper portions fitted to the second column 400, respectively.

The reinforcing members 800 and the heat sink 100 of the battery array 1000 according to an embodiment of the present disclosure may be fastened, coupled, fixed, or fitted to the coupling pins 300. The coupling pins 300 may penetrate or pass through the coupling portions 121 between the upper plate 110 and the lower plate 120 of the heat sinks 100 of battery array units 10 which are vertically adjacent to each other. The coupling pins 300 may sequentially penetrate or pass through the coupling holes 101 in the upper plate 110 (see, e.g., FIG. 3) and the coupling holes 127 in the lower plate 120 (see FIG. 3).

A coupling pin 300 may be provided, fitted, coupled, fastened, fixed, or attached to each column 400. The coupling pins 300 may be partially fitted, coupled, or fastened to the columns 400, and the remaining portions thereof may be exposed to the upper side of the columns 400.

For example, the coupling pins 300 may be assembled, coupled, fastened, or fixed to the columns 400 in an interference fit manner.

According to the configuration of the present disclosure, the coupling pins 300 may be easily assembled, coupled, fastened, or fixed to the columns 400. Due to this, the assemblability of the battery array 1000 can be improved over the conventional batter arry.

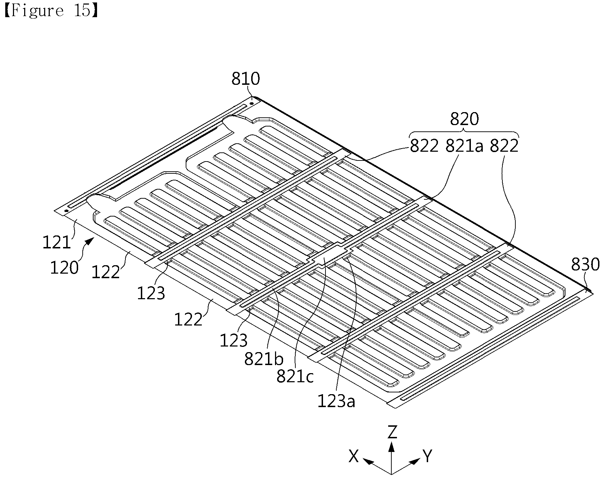

FIG. 15 is a view illustrating a heat sink 100 and reinforcing members 800 of a battery array 1000 according to another embodiment of the present disclosure. Referring to FIG. 15, the first middle reinforcing member 821a of the battery array 1000 according to an embodiment of the present disclosure may include a first part 821b extending long, a second part 821c extending from the first part 821a and configured to be larger than the second part 821b, and an accommodation portion 123 having a portion configured such that a portion accommodating the second part 821c is larger than a portion accommodating the first part 821b. The central portion of the first middle reinforcing member 821a may have a larger width than other portions. The central portion with the larger width may be the second part 821c and the remaining portion may be the first part 821b. The portion 123a accommodating the second part 821c may be configured to have a larger width than other accommodation portion 123.

The central portion of the heat sink 100 may bend or sag more largely than other portions.

According to the configuration of the present disclosure, the central portion of the heat sink 100 can be more stably supported by the reinforcing member 821a.

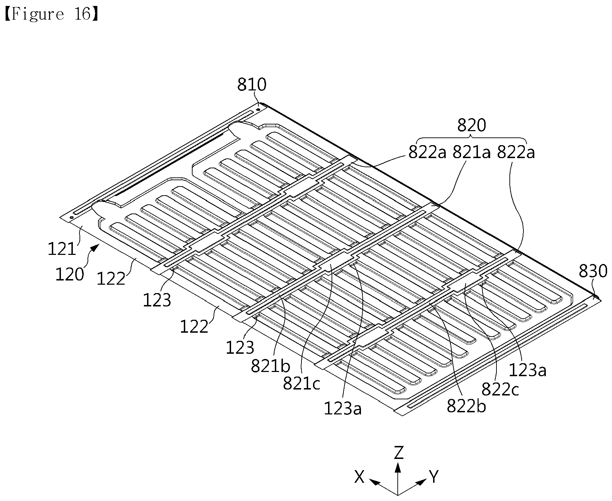

FIG. 16 is a view illustrating a heat sink 100 and reinforcing members 800 of a battery array according to another embodiment of the present disclosure. Referring to FIG. 16, a plurality of reinforcing members 800 of the battery array according to an embodiment of the present disclosure may be provided in which each of the reinforcing members may be configured to have partially different sizes.

The central portion of each of the second middle reinforcing members 822a may have multiple portions with a larger width than other portions. Side portions with the larger width may be the second parts 822c and the remaining portion may be the first part 822b. The portion 123a accommodating the second part 822c may be configured to have a larger width than the other accommodation portion 123.

According to the configuration of the present disclosure, the narrowing of the flow path of the cooling medium cm flowing between the upper plate 110 and the accommodation portions 123 and 123a can be minimized or prevented while more strongly supporting the heat sink 100.

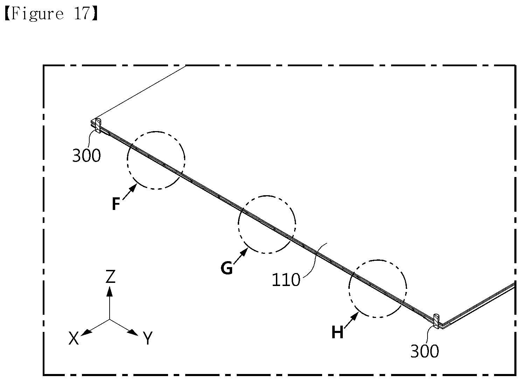

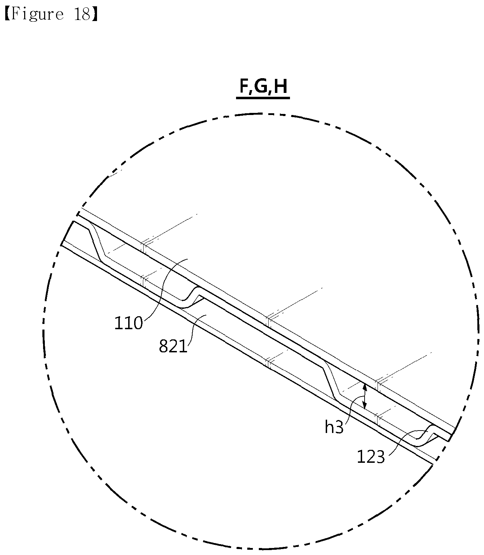

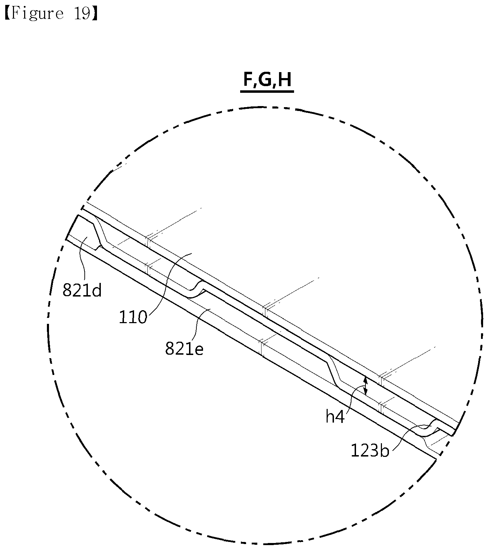

FIG. 17 is a view illustrating a modification of a cross-sectional configuration taken along cutting line E-E' in FIG. 9. FIG. 18 is an enlarged view of portions F, G, and H of FIG. 17. FIG. 19 is a view illustrating a modification of portions F, G, and H of FIG. 17. Referring to FIGS. 17 to 19, a plurality of reinforcing members 800 may be provided in the battery array 1000 according to an embodiment of the present disclosure in which each of the reinforcing members 800 may be configured to have partially different thicknesses. For example, the first middle reinforcing member 821 may have a central portion G that has a larger thickness than other portions. The central portion G with the larger thickness may be the second part 821e, and the remaining portions may be the first parts 821d. The portion 123b accommodating the second part 821e may be configured to have a height h4 lower than the height h3 of the other accommodation portions 123. In addition, other reinforcing members 800 may have a similar structure.

The central portion of the heat sink 100 according to an embodiment may bend or sag greater than other portions depending on the situation.

According to the configuration of the present disclosure, the central portion of the heat sink 100 can be more stably supported by the reinforcing members 821.

Referring to FIGS. 17 to 19, a plurality of reinforcing members 800 may be provided in the battery array 1000 according to an embodiment of the present disclosure in which each of the reinforcing members 800 may be configured to have partially different thicknesses.

The first middle reinforcing member 821 may have side portions F and H with a larger thickness than other portions. The side portions F and H with the larger thickness may be the second parts 822e, and the remaining portion may be the first part 822d. The portion 123b accommodating the second part 821e may be configured to have a height h4 lower than the height h3 of the other accommodation portions 123. In addition, other reinforcing members 800 may have a similar structure.

According to the configuration of the present disclosure, the narrowing of the flow path of the cooling medium cm flowing between the upper plate 110 and the accommodation portions 123 and 123b can be minimized or prevented while more strongly supporting the heat sink 100.

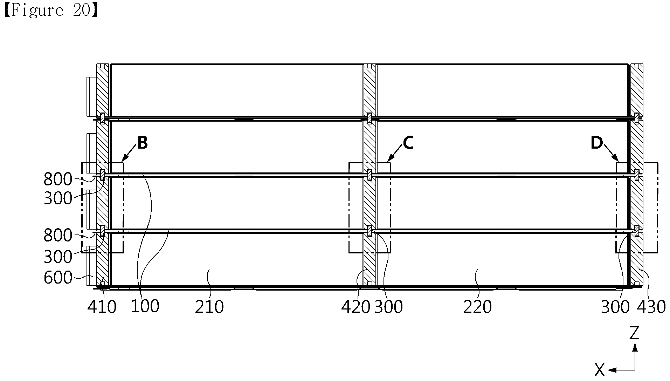

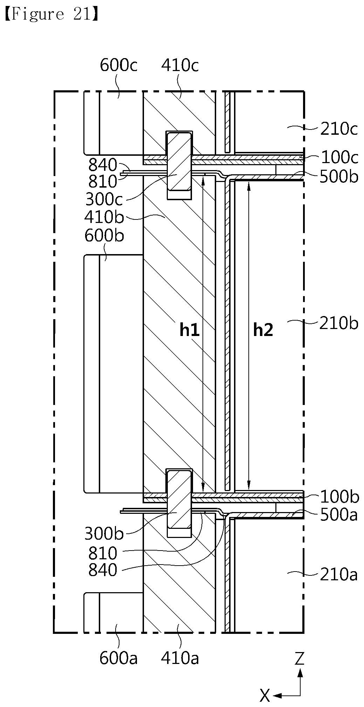

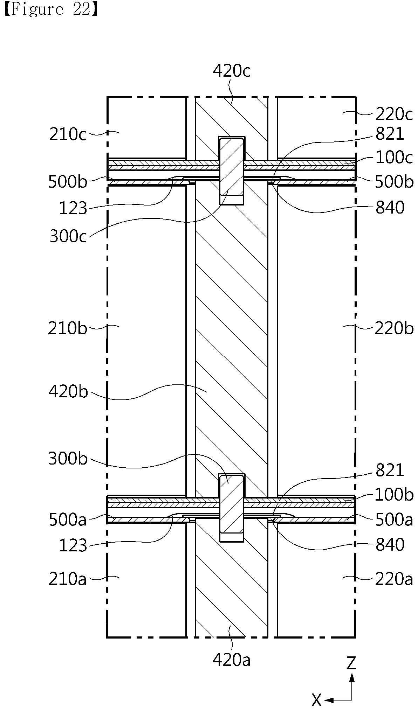

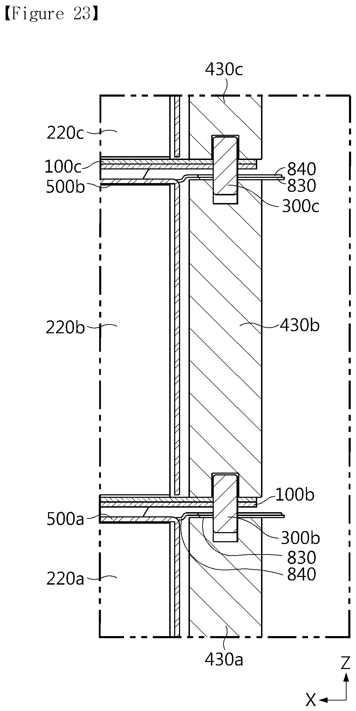

FIG. 20 is a view illustrating a portion of a cross-sectional configuration taken along the cutting line A-A' in FIG. 1. FIG. 21 is an enlarged view of portion B in FIG. 20. FIG. 22 is an enlarged view of portion C in FIG. 20. FIG. 23 is an enlarged view of portion D in FIG. 20. Referring to FIGS. 20 to 23, the first columns 410b, 420b, and 430b of the battery array 1000 according to an embodiment of the present disclosure may be configured to have a height h1 larger than the height h2 of the first battery cell units 210b and 220b.

The height h2 of the first columns 410b, 420b, and 430b may correspond to the distance from the top surface of a heat sink 100b to the bottom surface of a heat sink 100c adjacent to the heat sink 100b. In addition, battery cell units 210b and 220b and an insulating cover 500b may be disposed between the adjacent heat sinks 100b and 100c. In addition, a protrusion 122 may be located above the insulating cover 500b. Due to this, the height h1 of the first columns 410b, 420b, and 430b may be formed to be higher than the height h2 of the first battery cell units 210b and 220b.

According to the configuration of the present disclosure, the battery cell units 210b and 220b and the insulating cover 500b can be stably disposed between the heat sinks 100b and 100c.

Referring to FIGS. 20 and 21, a coupling pin 300b may penetrate a reinforcing member 810, a side reinforcing member 840, and the heat sink 100b. In addition, the lower portion of the coupling pin 300b may be fitted, coupled, fixed, or fastened to the front column 410a, and the upper portion of the coupling pin 300b may be fitted, coupled, fixed or fastened to the front column 410b.

A coupling pin 300c may penetrate the front reinforcing member 810, a side reinforcing member 840, and the heat sink 100c. In addition, the lower portion of the coupling pin 300c may be fitted, coupled, fixed, or fastened to the front column 410b, and the upper portion of the coupling pin 300c may be fitted, coupled, fixed or fastened to a front column 410c. The front battery cell units 210a, 210b, and 210c may be sequentially stacked in the vertical direction.

Referring to FIGS. 20 and 22, the lower portion of a coupling pin 300b may be fitted, coupled, fixed, or fastened to a middle column 420a, and the upper portion of the coupling pin 300b may be fitted, coupled, fixed, or fastened to a middle column 420b. The coupling pin 300b may penetrate a middle reinforcing member 821, a side reinforcing member 840, and the heat sink 100b. In addition, the lower portion of a coupling pin 300c may be fitted, coupled, fixed, or fastened to the middle column 420b, and the upper portion of the coupling pin 300c may be fitted, coupled, fixed, or fastened to a middle column 420c. The coupling pin 300c may penetrate a middle reinforcing member 821, a side reinforcing member 840, and the heat sink 100c.

Referring to FIGS. 20 and 23, the lower portion of a coupling pin 300b may be fitted, coupled, fixed, or fastened to a rear column 430a, and the upper portion of the coupling pin 300b may be fitted, coupled, fixed, or fastened to the rear column 430b. The coupling pin 300b may penetrate a rear reinforcing member 830, a side reinforcing member 840, and the heat sink 100b. In addition, the lower portion of a coupling pin 300c may be fitted, coupled, fixed, or fastened to a rear column 430b, and the upper portion of the coupling pin 300c may be fitted, coupled, fixed, or fastened to the rear column 430c. The coupling pin 300c may penetrate a rear reinforcing member 830, a side reinforcing member 840, and the heat sink 100c.

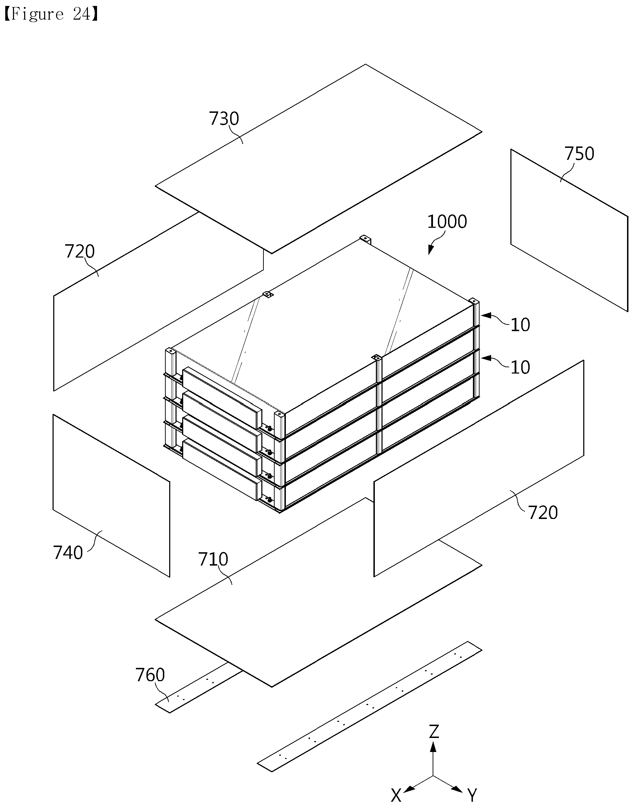

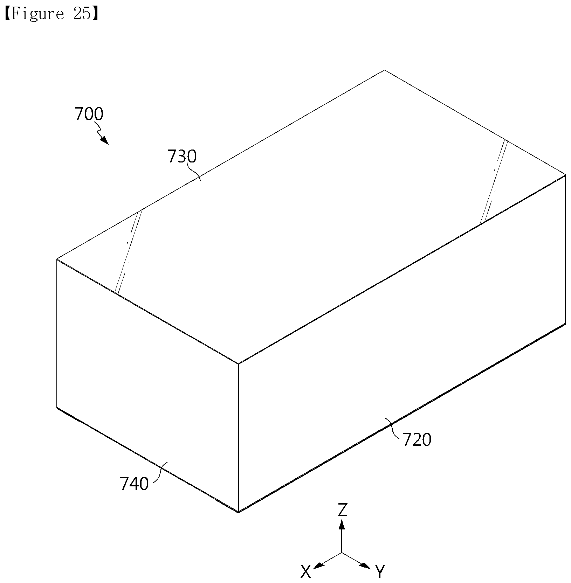

FIG. 24 is a view illustrating a battery array 1000 and a case 700 according to an embodiment of the present disclosure. FIG. 25 is a view illustrating how the battery array 1000 and the case 700 according to an embodiment of the present disclosure are coupled to each other. Referring to FIGS. 24 and 25, the battery array 1000 according to an embodiment of the present disclosure may be coupled, fastened, or assembled to the case 700. The case 700 may include a base plate 710 that covers the bottom surface of the battery array 1000. The case 700 may include side plates 720 that covers the left and right sides of the battery array 1000. The case 700 may include a top plate 730 that covers the top surface of the battery array 1000. The case 700 may include a front plate 740 that covers the front surface of the battery array 1000. The case 700 may include a rear plate 750 that covers the rear surface of the battery array 1000. According to an embodiment, the plates 710, 720, 730, 740, and 750 constituting the case 700 may be coupled to each other by welding.

In addition, a pad 760 may be disposed on the bottom surface of the base plate 710. The pad 760 may extend in the front-rear direction or the X-axis direction. There may be provided a pair of pads 760, which may be arranged at the side edges of the bottom surface of the base plate 710.

The battery container according to the present disclosure may include the battery array 1000 according to the present disclosure. There may be provided a plurality of battery arrays 1000. The battery container may include a container housing. The container housing may provide an accommodation space configured to accommodate the battery arrays. In addition, the battery container may include a controller configured to control the plurality of battery arrays. In addition, the battery container may be configured to additionally include a sensor configured to detect the states of the battery arrays 1000 or a fire extinguishing module configured to control a thermal event.

An energy storage system (ESS) according to the present disclosure may include a battery array 1000 according to the present disclosure. The energy storage system may include a plurality of battery containers. In addition, the battery container may include a plurality of battery arrays 1000. This energy storage system may provide a link group with a combination of a predetermined number of battery containers and control containers. As an example, the control containers may perform overall control or diagnosis of the battery containers. In addition, the control containers may include a DC part, an AC part, and a BSC part to control the battery containers. Meanwhile, each control container may be connected to a PCS.

While the embodiments of the present disclosure have been described using the drawings, the present disclosure is not limited by the embodiments. Various embodiments may be implemented by one of ordinary skill in the art to which the present disclosure belongs, within the scope equivalent to the technical idea of the present disclosure and the claims set forth below. Thus, the technical scope of the present disclosure is not limited to the descriptions herein, but should be defined with reference to the claims.

## Claims

1. A battery array comprising:
a first heat sink having a plate shape;
a battery cell unit mounted on a top surface of the first heat sink;
a first column coupled to the top surface of the first heat sink and extending in the vertical direction;
a second heat sink having a plate shape, located above the first column, and including a bottom surface coupled to the first column; and
a reinforcing member located between the second heat sink and the battery cell unit and configured to support the bottom surface of the second heat sink,
wherein the battery array has a structure in which a plurality of battery array units is stacked in a vertical direction.

2. The battery array of claim 1, further comprising:
a second column coupled to a top surface of the second heat sink and extending in the vertical direction,
wherein the reinforcing member and the second heat sink are configured to be located between the first column and the second column.

3. The battery array of claim 2, further comprising:
a coupling pin penetrating the second heat sink and the reinforcing member and including a lower portion fitted to the first column and an upper portion fitted to the second column.

4. The battery array of claim 1, wherein the reinforcing member is configured to be elongated along an edge of the second heat sink.

5. The battery array of claim 1, wherein the battery cell unit includes a front battery cell unit and a rear battery cell unit arranged in a front-rear direction, and
wherein the first column includes:
a front column located in front of the front battery cell unit;
a rear column located behind the rear battery cell unit; and
a middle column located between the front column and the rear column.

6. The battery array of claim 5, wherein the reinforcing member includes a front reinforcing member extending in a left-right direction and including one end coupled to the front column.

7. The battery array of claim 5, wherein the reinforcing member includes a middle reinforcing member extending in a left-right direction and including one end coupled to the middle column.

8. The battery array of claim 5, wherein the reinforcing member includes a side reinforcing member extending in a front-rear direction and including one end coupled to the front column and a remaining end coupled to at least one of the middle column and the rear column.

9. The battery array of claim 1, wherein the second heat sink includes:
an upper plate having a flat plate shape; and
a lower plate coupled to a bottom surface of the upper plate and including an accommodation portion configured to receive at least a portion of the reinforcing member.

10. The battery array of claim 9, wherein the second heat sink is configured such that a cooling flow path is formed between the upper plate and the accommodation portion.

11. The battery array of claim 9, wherein the reinforcing member includes:
an elongated first part; and
a second part extending from the first part and configured to be larger than the first part,
wherein the accommodation portion is configured such that a portion accommodating the second part is formed to be larger than a portion accommodating the first part.

12. The battery array of claim 9, wherein a plurality of reinforcing members is provided, and
each of the plurality of reinforcing members is configured to have partially different sizes.

13. A battery array unit comprising:
a first heat sink having a plate shape;
a battery cell unit mounted on a top surface of the first heat sink;
a first column coupled to a top surface of the first heat sink and extending in a vertical direction, wherein the first column includes an upper portion configured to be fastened to another component; and
a reinforcing member configured to support a bottom surface of the first heat sink.

14. A battery container comprising the battery array of claim 1.

15. An energy storage system comprising the battery array of claim 1.

16. A battery array unit assembly comprising:
a heat sink having a plate shape;
a column coupled to a top surface of the heat sink and extending in a vertical direction; and
a reinforcing member located below the heat sink and configured to support a bottom surface of the heat sink.

17. The battery array unit assembly of claim 16, wherein the reinforcing member is an H-bracket.

18. The battery array unit assembly of claim 16, wherein a heat transfer material is coated on the top surface of the heat sink having the plate shape.
